# EUROPÄISCHE PATENTSCHRIFT

(11) **EP 3 335 612 B1**
(45) Veröffentlichungstag und Bekanntmachung des Hinweises auf die Patenterteilung: **11.03.2020**
(21) Anmeldenummer: 17203733.5
(22) Anmeldetag: 27.11.2017
(51) Int. Cl.: A47L 15/00, A47L 15/42, A47L 15/48, D06F 58/20, D06F 58/24

(54) **HAUSHALTSGESCHIRRSPÜLMASCHINE MIT WÄRMEPUMPENANORDNUNG**
DOMESTIC DISHWASHER WITH HEAT PUMP ASSEMBLY
LAVE-VAISSELLE À USAGE MÉNAGER POURVU DE SYSTÈME DE POMPE À CHALEUR

(30) Priorität: 13.12.2016 ES 201631579
(43) Veröffentlichungstag der Anmeldung: 20.06.2018
(73) Patentinhaber: BSH Hausgeräte GmbH, 81739 München (DE)
(72) Erfinder: Estremera Carrera, Vanesa, 31006 Pamplona (ES); Merino Alcaide, Eloy, 31621 Sarriguren (ES)

(56) Entgegenhaltungen:
- EP-A1- 2 064 982
- EP-A1- 2 881 514
- WO-A1-2014/127799
- DE-A1-102014 219 457
- US-A- 3 658 075

## Beschreibung

Die Erfindung betrifft eine Haushaltsgeschirrspülmaschine mit einem Aufnahmeraum zur Aufnahme von Spülgut, wobei die Haushaltsgeschirrspülmaschine eine Wärmepumpenanordnung mit wenigstens einem Verdampfer zum Verdampfen eines Kältemittels und einem Verflüssiger zum Kondensieren des Kältemittels umfasst, wobei der Verdampfer und/oder der Verflüssiger ein oder mehrere wenigstens abschnittsweise flächig ausgebildete Wärmetauscherelemente umfassen.

Gattungsgemäße Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte wird das Spülgut mit Spülflotte (= Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet.

Sowohl beim Reinigen als auch beim Trocknen muss Wärme von einer Wärmequelle (z. B. einer Wärme- oder Luftheizung) der Haushaltsgeschirrspülmaschine auf die Spülflotte oder auf in die Haushaltsgeschirrspülmaschine eintretende oder darin zirkulierende Luft übertragen werden. Hierfür sind im Stand der Technik bereits Wärmetauscherelemente bekannt, die beispielsweise aus Metall gefertigt sind und als Rohrschlange vorliegen. Der Wärmeübergang zwischen dem innerhalb des Wärmetauscherelements fließenden Mediums und der Spülflotte bzw. der Luft, auf die Wärme vom Wärmetauschermedium übertragen oder von denen Wärme auf das Wärmetauschermedium übertragen werden soll, ist jedoch noch verbesserungswürdig.

Haushaltsgeschirrspülmaschinen bzw. Waschmaschinen mit Wärmepumpenanordnung sind beispielsweise in der US 3 658 075 A, der WO 2014/127799 A1, der DE 10 2014 219 457 A1 oder der EP 2 881 514 A1 beschrieben.

Aufgabe der vorliegenden Erfindung ist es, eine Haushaltsgeschirrspülmaschine mit zumindest einem Wärmetauscherelement vorzuschlagen, die den bekannten Stand der Technik vorteilhaft weiterbildet.

Die Aufgabe wird gelöst durch eine Haushaltsgeschirrspülmaschine mit den Merkmalen des unabhängigen Patentanspruchs.

Die Haushaltsgeschirrspülmaschine gemäß vorliegender Erfindung weist zusätzlich zu einem Aufnahmeraum zur Aufnahme von Spülgut eine Wärmepumpenanordnung auf. Die Wärmepumpenanordnung umfasst ein als Verdampfer wirkendes Wärmetauscherelement zum Verdampfen eines Kältemittels und einen Verdichter zum Verdichten des verdampften Kältemittels. Mit Hilfe des Verdichters wird das in den Verdichter beim Betrieb der Wärmepumpenanordnung eintretende gasförmige Kältemittel komprimiert, wobei es sich erwärmt. Ferner umfasst die Wärmepumpenanordnung ein als Verflüssiger wirkendes Wärmetauscherelement, in dem das erwärmte gasförmige Kältemittel wieder kondensiert und hierbei Wärme abgibt, die für die Erwärmung von in der Haushaltsgeschirrspülmaschine vorhandene Spülflotte oder in den Aufnahmeraum eintretende oder dort zirkulierende Luft genutzt werden kann. Anschließend wird das verflüssigte Kältemittel mit Hilfe eines Expansionsorgans (in der Regel eines Drosselventils) entspannt und gelangt schließlich wieder zurück zum Verdampfer, in der es unter Wärmeaufnahme wieder in den gasförmigen Zustand übergeht, um dann erneut dem Verdichter zugeführt zu werden.

Erfindungsgemäß ist nun vorgesehen, dass zumindest das oder eines der Wärmetauscherelemente (vorzugsweise alle Wärmetauscherelemente der Wärmepumpenanordnung), die von dem genannten Kältemittel durchströmt werden, zwei Flächenelemente umfasst, die abschnittsweise derart miteinander verbunden sind, dass zwischen den Flächenelementen ein oder mehrere Strömungskanäle für das Kältemittel ausgebildet sind. Zumindest ein Abschnitt des Flächenelements sollte eine Breite und eine senkrecht hierzu verlaufende Länge aufweisen, die einem Vielfachen der senkrecht zur Länge und senkrecht zu Breite verlaufenden Dicke des Abschnitts entspricht. Vorzugsweise betragen die Länge und die Breite wenigstens 20 cm, während die Dicke maximal 10 cm, vorzugsweise maximal 6 cm, betragen sollte. Im Übrigen sei darauf hingewiesen, dass das Wärmetauscherelement auch geknickt ausgebildet sein kann, insbesondere, wenn es sich, wie unten noch näher beschrieben, über zwei oder mehr Wandungen der Haushaltsgeschirrspülmaschine erstreckt. Auch in diesem Fall umfasst das Wärmetauscherelement zwei Flächenelemente, die jedoch in diesem Fall zwei oder mehr, vorzugsweise senkrecht zueinander verlaufende, Flächenabschnitte aufweisen. Die Flächenabschnitte selbst sollten jedoch stets als in einer Ebene liegende Abschnitte vorliegen. Zudem sollten die einzelnen Flächenelemente eines Wärmetauscherelements zumindest größtenteils parallel zueinander verlaufen, wobei ein Wärmetauscherelement auch mehrere entsprechende Flächenabschnitte umfassen kann.

An dieser Stelle sei darauf hingewiesen, dass im Folgenden in der Regel nur ein Wärmetauscherelement beschrieben wird. Sollte die Haushaltsgeschirrspülmaschine mehrere Wärmetauscherelemente aufweisen, was vorliegend bevorzugt ist, so können ein, mehrere oder alle Wärmetauscherelemente die nachfolgend beschriebenen Merkmale aufweisen. Selbstverständlich können sich einzelne Wärmetauscherelemente der Haushaltsgeschirrspülmaschine auch voneinander unterscheiden.

In jedem Fall ist vorgesehen, dass zumindest ein Wärmetauscherelement einen oder mehrere Strömungskanäle für das Kältemittel aufweist. Der oder die Strömungskanäle weisen vorzugweise einen kreis- oder ovalförmigen Querschnitt auf. Zudem ist pro Wärmetauscherelement vorzugsweise nur ein Strömungskanal vorhanden, der sich von einem Kältemitteleinlass des Wärmetauscherelements bis zu einem Kältemittelauslass des Wärmetauscherelements erstreckt.

Vorzugsweise besitzt der Strömungskanal geradlinig verlaufende Abschnitte. Zusätzlich oder alternativ kann der Strömungskanal auch geschwungene bzw. gebogene Abschnitte aufweisen. Beispielsweise könnten der oder die Strömungskanäle meanderförmig oder spiralförmig verlaufen. Insbesondere sollten der oder die Strömungskanäle jedoch in einer Ebene liegen, die durch eine Verbindungsebene der beiden Flächenelemente gebildet ist.

Bei den Flächenelementen handelt es sich vorzugsweise um zumindest größtenteils ebene Platten, die aufeinandergelegt und verbunden, z. B. verklebt, verschweißt oder verlötet, wurden. Zumindest eine der Platten umfasst Vertiefungen, die z. B. durch Tiefziehen oder Prägen vor dem Zusammenbringen der beiden Flächenelemente in die Platte eingebracht wurden. Die Vertiefungen begrenzen schließlich den oder die Strömungskanäle. Die genannten Platten können in einer Ebene liegen oder auch mehrere Abschnitte aufweisen, wobei jeder Abschnitt in einer einzigen eigenen Ebene liegt und die Ebenen z. B. senkrecht zueinander verlaufen können.

Nach einer vorteilhaften Weiterbildung ist zumindest eine den Aufnahmeraum begrenzende Wandung wenigstens abschnittsweise durch ein Wärmetauscherelement gebildet. Das Wärmetauscherelement liegt also nicht als von den einzelnen Wandungen der Haushaltsgeschirrspülmaschine getrenntes Element vor. Vielmehr stellt zumindest ein Wärmetauscherelement eine Wandung derselben oder zumindest einen Teil einer entsprechenden Wandung dar. Anders ausgedrückt ist gemäß dieser vorteilhaften Weiterbildung die dem Aufnahmeraum zugewandte Innenoberfläche des Wärmetauscherelements vom Aufnahmeraum her sichtbar und begrenzt diesen teilweise oder ganz.

Beim Betrieb der Haushaltsgeschirrspülmaschine kann also im Aufnahmeraum zirkulierende Spülflotte (z.B. während des Spülbetrieb der Geschirrspülmaschine) oder im Aufnahmeraum vorhandene Luft (wie z.B. während des Trocknungsbetriebs der Geschirrspülmaschine) direkt am entsprechenden Wärmetauscherelement vorbeistreichen und an dieses Wärme abgeben oder Wärme von diesem aufnehmen.

Insbesondere während des Reinigungsschritts ist es von Vorteil, wenn die Spülflotte Wärme vom Wärmetauscherelement aufnimmt. Das entsprechende Wärmetauscherelement kann in diesem Fall als Verflüssiger fungieren, so dass innerhalb des Wärmetauscherelements gasförmiges Kältemitte unter Wärmeabgabe an die Spülflotte kondensiert.

Während des Trocknungsschritts sollte hingegen Wärme von der Luft im Aufnahmeraum bzw. von dem von der Luft mitgeführten Wasserdampf auf ein Wärmetauscherelement übertragen werden. Dieses Wärmetauscherelement sollte also als Verdampfer der Wärmepumpenanordnung fungieren. Vorzugsweise stellt also eine erste Wandung oder ein Teil derselben den Verflüssiger und/oder eine zweite Wandung oder ein Teil derselben den Verdampfer der Wärmepumpenanordnung dar. Vorzugsweise handelt es sich bei der als Verflüssiger dienenden Wandung um die Bodenwandung, um vom Verflüssiger abgegebene Wärme besonders effizient auf die Spülflotte übertragen zu können.

Ferner ist der Aufnahmeraum durch eine Tür und einen Spülbehälter begrenzt, wobei zumindest ein Wärmetauscherelement durch den Spülbehälter gebildet ist. Der Spülbehälter ist in diesem Fall vorzugsweise ein einteiliges Gebilde aus Metall, wobei zumindest eine der Wandungen des Spülbehälters gleichzeitig eine den Aufnahmeraum begrenzende und als Wärmetauscherelement dienende Wandung bildet.

Des Weiteren bildet ein durch den Spülbehälter gebildetes und als Verdampfer dienendes Wärmetauscherelement eine Seitenwandung des Spülbehälters. Zusätzlich oder alternativ kann das entsprechende Wärmetauscherelement auch eine Deckenwandung und/oder eine Rückwandung des Spülbehälters ganz oder teilweise bilden. Eine oder mehrere Wandungen des Spülbehälters dienen also in diesem Fall nicht nur als räumliche Begrenzung des Aufnahmeraums. Vielmehr dienen sie gleichzeitig als Wärmetauscherelement, das Teil der Wärmepumpenanordnung der Haushaltsgeschirrspülmaschine ist.

Alternativ oder zusätzlich zu dem im vorherigen Absatz genannten Merkmal bildet ein durch den Spülbehälter gebildetes und als Verflüssiger dienendes Wärmetauscherelement eine Bodenwandung des Spülbehälters oder einen Abschnitt derselben. Wird die Wärmepumpenanordnung durch Aktivierung des Verdichters betrieben, so gibt das entsprechende Wärmetauscherelement Wärme an die sich im Bereich der Bodenwandung sammelnde Spülflotte ab. Die Bodenwandung kann beispielsweise eine Vertiefung (so genannter Pumpensumpf) aufweisen, wobei sich der oder die Strömungskanäle des Wärmetauscherelements um die Vertiefung erstrecken können.

Nach einer vorteilhaften Weiterbildung erstreckt sich ein Wärmetauscherelement über wenigstens zwei den Aufnahmeraum begrenzende Wandungen. Beispielsweise könnte sich das entsprechende Wärmetauscherelement über eine Seitenwandung und die Rückwandung erstrecken. Alternativ bildet ein Wärmetauscherelement wenigstens zwei den Aufnahmeraum begrenzende Wandungen, wobei sich der oder die Strömungskanäle nur über einen Teil der Wandungen erstrecken können. Vorzugsweise sind sämtliche Wandungen des Spülbehälters Teil eines Wärmetauscherelements, wobei sich der oder die Strömungskanäle nur über einen Teil der Wandungen erstrecken können.

Gemäß einer vorteilhaften Weiterbildung weist die Haushaltsgeschirrspülmaschine wenigstens zwei Wärmetauscherelemente auf, wobei der Verdampfer der Wärmepumpenanordnung durch ein erstes Wärmetauscherelement und der Verflüssiger durch ein zweites, separates Wärmetauscherelement gebildet ist. Die einzelnen Wärmetauscherelemente können in diesem Fall jeweils in einem Bereich platziert werden, der für den jeweiligen Wärmeaustausch am besten geeignet ist. So sollte das als Verdampfer wirkende Wärmetauscherelement im Bereich einer oder beider Seitenwandungen und/oder der Rückwandung und/oder der Deckenwandung angeordnet sein, während das als Verflüssiger wirkende Wärmetauscherelement vorzugsweise im Bereich der Bodenwandung angeordnet ist.

Gemäß einer vorteilhaften Weiterbildung ist wenigstens ein Wärmetauscherelement im Bereich einer den Aufnahmeraum begrenzenden Wandung angeordnet, insbesondere ist das Wärmetauscherelement außen auf einer Wandung des Spülbehälters angebracht, und steht mit der Wandung in wärmeleitendem Kontakt. Beispielsweise kann das Wärmetauscherelement parallel zu einer Wandung der Haushaltsgeschirrspülmaschine verlaufen. Bei der Wandung kann es sich um eine Seitenwandung, um die Rückwandung, eine Deckenwandung und/oder auch eine Bodenwandung der Haushaltsgeschirrspülmaschine bzw. eines den Aufnahmeraum umgebenden Spülbehälters handeln. Beispielsweise kann das Wärmetauscherelement über eine Wämeleitung mit dem Spülbehälter in Verbindung stehen. Durch die Verwendung von Flächenelementen, die dazwischenliegende Strömungskanäle oder Kanalabschnitte eines Strömungskanals ausbilden, besitzt das jeweilige Wärmetauscherelement eine relativ große Wärmetauscherfläche, wobei die Wärme aufgrund der Wärmeleitung des jeweiligen Wärmetauscherelements auf das Kältemittel oder von diesem auf am Wärmetauscherelement vorbeistreichende Luft oder Spülflotte übertragen werden kann.

Gemäß einer vorteilhaften Weiterbildung weist zumindest ein erstes Flächenelement die oben bereits genannte Vertiefung auf, die einen Strömungskanal teilweise begrenzt, wobei die restliche Begrenzung dieses Strömungskanals durch ein zweites Flächenelement, vorzugsweise durch eine Vertiefung desselben, gebildet ist. Der oder die Strömungskanäle werden also nicht durch ein einziges Flächenelement begrenzt. Vielmehr entstehen der oder die Strömungskanäle erst durch das Verbinden zweier Flächenelemente, da der oder die Strömungskanäle stets durch zwei Flächenelemente nach außen hin begrenzt werden.

Nach einer vorteilhaften Weiterbildung sind die Flächenelemente zumindest eines Wärmetauscherelements wenigstens im Bereich des oder der Strömungskanäle dieses Wärmetauscherelements bezüglich einer Kontaktebene der beiden Flächenelemente spiegelsymmetrisch ausgebildet. Die Kontaktebene verläuft vorzugsweise in einer planen Ebene. Vorzugsweise begrenzt also jedes Flächenelement im Wesentlichen die halbe Begrenzungsfläche des oder der Strömungskanäle.

Gemäß einer vorteilhaften Weiterbildung umfasst wenigstens ein Wärmetauscherelement zwei Flächenelemente in Form von Metall- oder Kunststoffplatten, die stoffschlüssig, formschlüssig oder mit Hilfe eines Haftmittels miteinander verbunden sind. Beispielsweise könnten die Flächenelemente, die auch abgewinkelt sein können, falls sich das entsprechende Wärmetauscherelement über mehr als eine Wandung der Haushaltsgeschirrspülmaschine erstreckt, verklebt sein. Auch ist es denkbar, die Flächenelemente stellenweise zu verschweißen oder zu verlöten. In jedem Fall sollte die Verbindung derart beschaffen sein, dass das Kältemittel nicht unkontrolliert aus dem Wärmetauscherelement austreten kann.

Aus- und Weiterbildungen des erfindungsgemäßen Verfahrens sind bei der Beschreibung der beanspruchten Geschirrspülmaschine erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- Figur 1: eine Frontansicht einer erfindungsgemäßen Haushaltsgeschirrspülmaschine,
- Figur 2: eine Draufsicht eines erfindungsgemäßen Wärmetauscherelements,
- Figur 3: einen Längsschnitt durch ein erfindungsgemäßes Wärmetauscherelement entlang der Linie A-A' in Figur 2,
- Figur 4: eine Perspektive eines Spülbehälters einer weiteren erfindungsgemäßen Haushaltsgeschirrspülmaschine, und
- Figur 5: eine Perspektive eines Spülbehälters einer weiteren erfindungsgemäßen Haushaltsgeschirrspülmaschine.

In den folgenden Figuren sind nur diejenigen Bestandteile einer Haushaltsgeschirrspülmaschine mit Bezugszeichen versehen und erläutert, welche für das Verständnis der Erfindung erforderlich sind. Es versteht sich von selbst, dass die erfindungsgemäße Haushaltsgeschirrspülmaschine weitere Teile und Baugruppen umfassen kann.

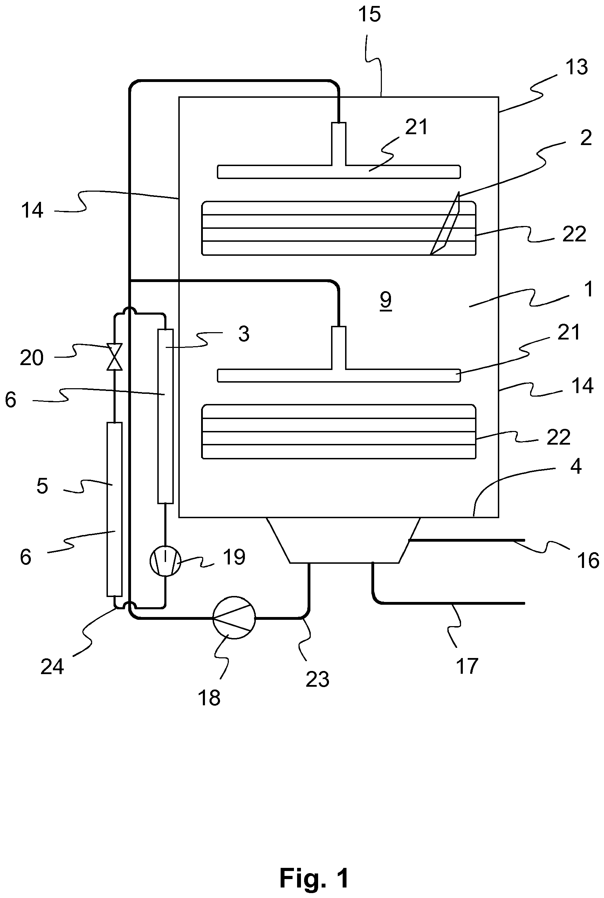

Die erfindungsgemäße Haushaltsgeschirrspülmaschine (s. beispielsweise Figur 1) umfasst mehrere Wandungen (Seitenwandungen 14, Rückwandung 9, Deckenwandung 15 und Bodenwandung 4), die einen innenliegenden Aufnahmeraum 1 begrenzen, der der Aufnahme von Spülgut 2 dient. Hierfür sind im Aufnahmeraum 1 beispielsweise ein oder mehrere Geschirrkörbe 22 vorhanden. Ferner sind ein oder mehrere Sprüharme 21 vorhanden, mit deren Hilfe das Spülgut 2 z. B. während eines Reinigungsschritts eines Spülprogramms mit Spülflotte, d. h. Wasser oder Wasser mit Reinigungs- und/oder Klarspülmittel versetzt, beaufschlagt werden kann.

Zur Versorgung mit Frischwasser ist die Haushaltsgeschirrspülmaschine über einen Wasserzulauf 16 mit einem nicht gezeigten Frischwassernetz verbunden. Ebenso ist ein Spülflottenablauf 17 vorhanden, über den die Haushaltsgeschirrspülmaschine mit einem Abwassernetz in Verbindung steht und über den verschmutzte Spülflotte aus der Haushaltsgeschirrspülmaschine abgeführt werden kann. Bevor die Spülflotte jedoch über den Spülflottenablauf 17 entsorgt wird, wird sie in der Regel zunächst unter Einbeziehung einer Spülflottenleitung 23 mehrfach im Kreislauf geführt, wobei hierfür eine Umwälzpumpe 18 vorhanden ist.

Um die Spülflotte zu erwärmen, umfasst die Haushaltsgeschirrspülmaschine eine Wärmepumpenanordnung mit einem Verdampfer 3, einem Verdichter 19, einem Expansionsorgan 20 und einem Verflüssiger 5, jeweils verbunden über eine Kältemittelleitung 24. Wird nun der Verdichter 19 aktiviert, so wird das im Bereich des Verdichters 19 gasförmig vorliegende Kältemittel verdichtet. Das verdichtete Kältemittel strömt weiter zum Verflüssiger 5, wo es Wärme abgibt und dabei kondensiert. Das flüssige Kältemittel gelangt anschließend zum Expansionsorgan 20, das eine Druckverminderung bewirkt. Im weiteren Verlauf strömt das noch immer oder zumindest teilweise flüssige Kältemittel zum Verdampfer 3. Dort entzieht es der Umgebung Wärme und wird hierdurch in den gasförmigen Aggregatszustand überführt, um schließlich wieder zum Verdichter 19 zu gelangen, so dass sich der Kältemittelkreislauf schließt.

Im gezeigten Beispiel ist der Verdampfer 3 im Bereich einer Seitenwandung 14 angeordnet, so dass aus dem Aufnahmeraum 1 und damit auch von im Aufnahmeraum 1 vorhandenem Wasserdampf Wärme auf die Wärmepumpenanordnung übertragen werden kann. Der Wasserdampf kondensiert in diesem Fall, so dass die Trocknung des Spülguts 2 während eines Trocknungsschritts unterstützt wird.

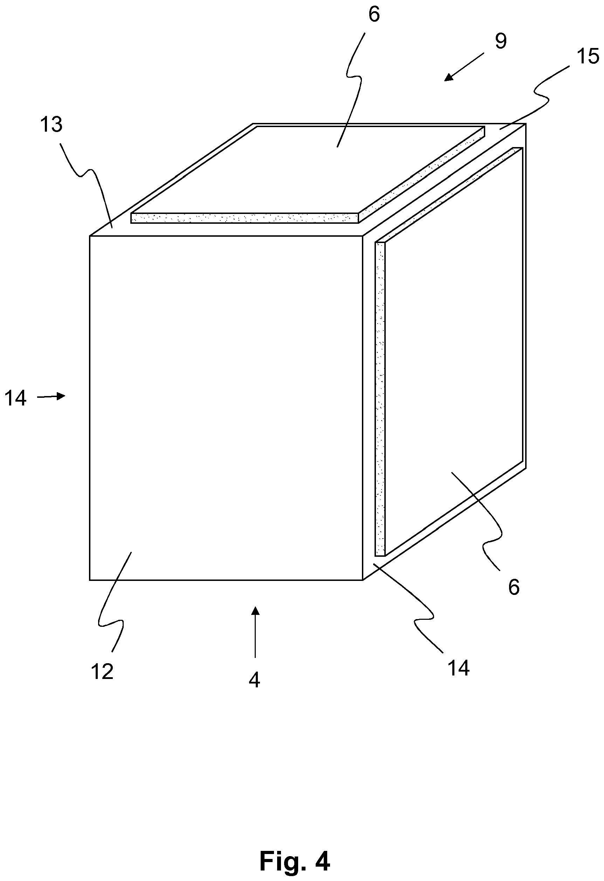

Der Verflüssiger 5 ist hingegen an einer Stelle untergebracht, in der er keinen direkten Kontakt mit dem Spülbehälter 13 aufweist, der durch die Wandungen 4, 9, 14, 15 und einer in Figur 4 gezeigten Tür 12 begrenzt ist. Eine entsprechende Ausführung ist dann sinnvoll, wenn die Spülflotte durch eine entsprechende, nicht gezeigte, Flüssigkeitsführung direkt am Verflüssiger 5 vorbeigeführt wird.

Erfindungsgemäß ist nun vorgesehen, dass zumindest eines der Wärmetauscherelemente 6, die Teil des Verflüssigers 5 oder des Verdampfers 3 sind oder die genannten Bauteile darstellen, zwei Flächenelemente 7 umfasst, die abschnittsweise derart miteinander verbunden sind, dass zwischen den Flächenelementen 7 ein oder mehrere Strömungskanäle 8 für das Kältemittel ausgebildet sind. Der oder die Strömungskanäle 8 werden also nicht durch separate Rohrleitungen gebildet, die mit einem flächigen Träger verbunden sind.

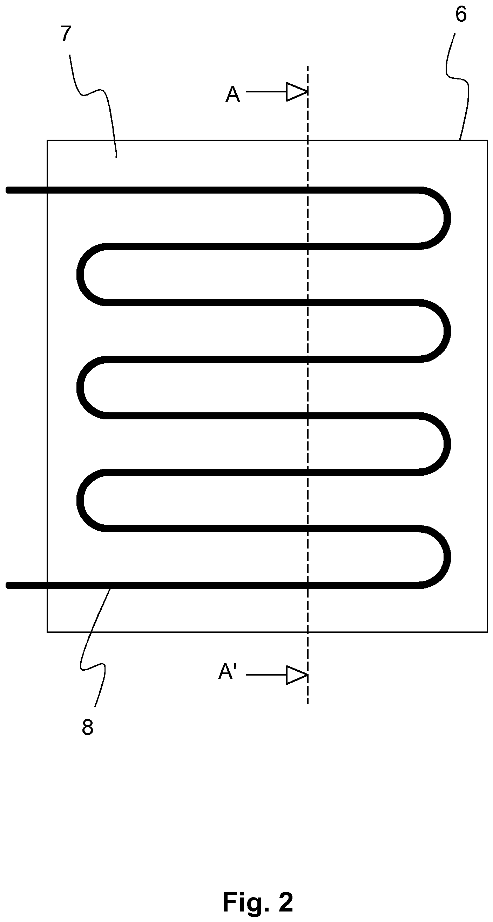

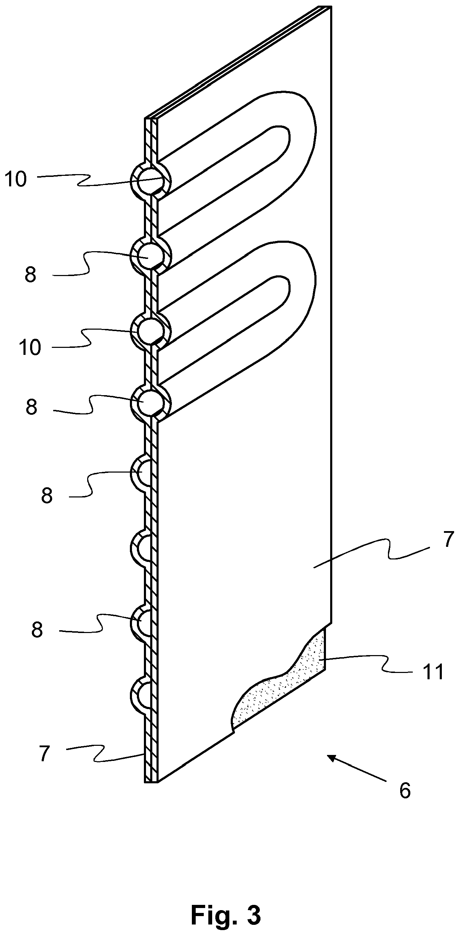

Vielmehr werden zwei Flächenelemente 7 im Bereich einer Kontaktebene 11 miteinander verbunden, z. B. verklebt. Der oder die Strömungskanäle 8 entstehen dadurch, dass eines der Flächenelemente 7 oder beide Flächenelemente 7 mit einer Vertiefung 10 versehen werden, die nach dem Verbinden der Flächenelemente 7 als Begrenzung des oder der Strömungskanäle 8 dienen. Figuren 2 und 3 zeigen ein entsprechendes Wärmetauscherelement 6, wobei Figur 3 einen Schnitt entlang der Linie A-A' in Figur 2 darstellt.

Figur 3 zeigt darüber hinaus, dass entweder nur ein Flächenelement 7 (untere Hälfte des Wärmetauscherelements 6) oder beide Flächenelemente 7 (obere Hälfte des Wärmetauscherelements 6) mit einer entsprechenden Vertiefung 10 ausgestattet sein können.

Die Flächenelemente 7 können im Übrigen aus Metall oder einem Kunststoff gefertigt sein.

Figur 4 zeigt nun, dass ein oder mehrere Wärmetauscherelemente 6 von außen am Spülbehälter 13 angebracht sein können. Zwischen Spülbehälter 13 und Wärmetauscherelement 6 oder zwischen Wärmetauscherelement 6 und einer nicht gezeigten Außenwand der Haushaltsgeschirrspülmaschine kann sich eine Isolierung befinden.

Insbesondere ist es denkbar, dass mehrere Wandungen 4, 9, 14, 15 mit einem Wärmetauscherelement 6 versehen sind, die wiederum über entsprechende Leitungen verbunden sein können.

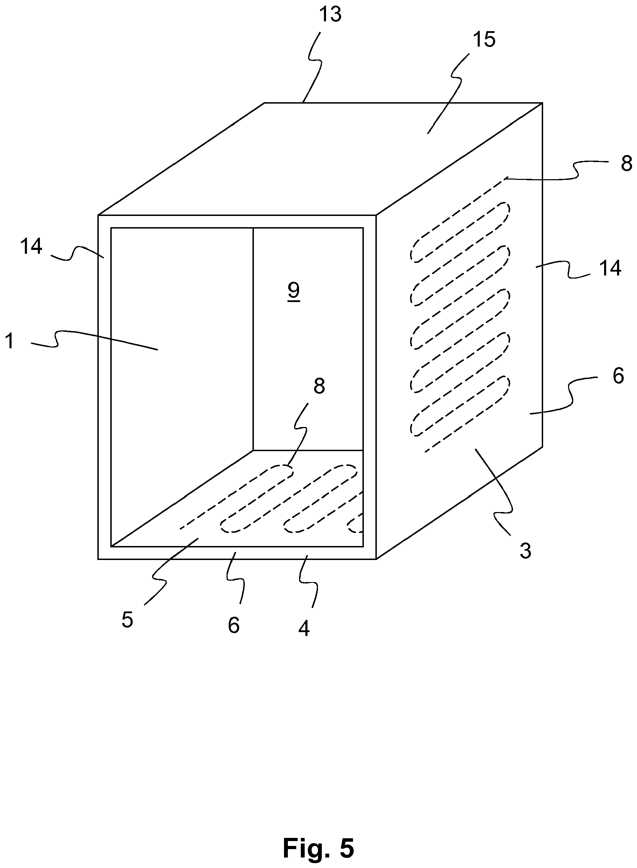

Besonders bevorzugt ist jedoch eine in Figur 5 gezeigte Ausführung, bei der die Wärmetauscherelemente 6 der Wärmepumpenanordnung oder zumindest ein Teil derselben nicht an einer der Wandungen 4, 9, 14, 15 der Haushaltsgeschirrspülmaschine angebracht sind. Vielmehr werden eine oder mehrere Wandungen 4, 9, 14, 15 bzw. zumindest Abschnitte derselben direkt durch ein Wärmetauscherelement 6 gebildet.

Figur 5 zeigt in diesem Zusammenhang, dass der oder die Strömungskanäle 8 in diesem Fall innerhalb einer oder mehreren Wandungen 4, 9, 14, 15 verlaufen. Der Wärmeübergang zwischen dem Kältemittel der Wärmepumpenanordnung und dem Aufnahmeraum 1 bzw. der darin zirkulierenden Luft und/oder der darin zirkulierenden Spülflotte ist in diesem Fall gegenüber dem Fall optimiert, der in Figur 4 gezeigt ist.

Der oder die Strömungskanäle 8 erstrecken sich vorzugsweise über mehrere Wandungen 4, 9, 14, 15. Beispielsweise wäre es denkbar, dass der gesamte Spülbehälter 13 aus zwei ein- oder mehrfach abgewinkelten Flächenelementen 7 besteht, die gleichzeitig ein oder mehrere Wärmetauscherelemente 6 und die Begrenzung des Aufnahmeraums 1 bilden.

Im Übrigen ist die Erfindung nicht auf das dargestellte Ausführungsbeispiel beschränkt.

Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

1. Aufnahmeraum
2. Spülgut
3. Verdampfer
4. Bodenwandung des Spülbehälters
5. Verflüssiger
6. Wärmetauscherelement
7. Flächenelement
8. Strömungskanal
9. Rückwandung
10. Vertiefung
11. Kontaktebene
12. Tür
13. Spülbehälter
14. Seitenwandung des Spülbehälters
15. Deckenwandung
16. Wasserzulauf
17. Spülflottenablauf
18. Umwälzpumpe
19. Verdichter
20. Expansionsorgan
21. Sprüharm
22. Geschirrkorb
23. Spülflottenleitung
24. Kältemittelleitung

## Patentansprüche

1. Haushaltsgeschirrspülmaschine mit einem Aufnahmeraum (1) zur Aufnahme von Spülgut (2), wobei die Haushaltsgeschirrspülmaschine eine Wärmepumpenanordnung mit wenigstens einem Verdampfer (3) zum Verdampfen eines Kältemittels und einem Verflüssiger (5) zum Kondensieren des Kältemittels umfasst, wobei der Verdampfer (3) und/oder der Verflüssiger (5) ein oder mehrere wenigstens abschnittsweise flächig ausgebildete Wärmetauscherelemente (6) umfassen, wobei zumindest eines der Wärmetauscherelemente (6) zwei Flächenelemente (7) umfasst, die abschnittsweise derart miteinander verbunden sind, dass zwischen den Flächenelementen (7) ein oder mehrere Strömungskanäle (8) für das Kältemittel ausgebildet sind, wobei der Aufnahmeraum (1) durch eine Tür (12) und einen Spülbehälter (13) begrenzt ist, **dadurch gekennzeichnet, dass** zumindest ein Wärmetauscherelement (6) durch den Spülbehälter (13) gebildet ist, wobei ein durch den Spülbehälter (13) gebildetes und als Verdampfer (3) dienendes Wärmetauscherelement (6) eine Seitenwandung (14), eine Deckenwandung (15) und/oder eine Rückwandung (9) des Spülbehälters (13) bildet und/oder wobei ein durch den Spülbehälter (13) gebildetes und als Verflüssiger (5) dienendes Wärmetauscherelement (6) eine Bodenwandung (4) des Spülbehälters (13) oder einen Abschnitt derselben bildet.

2. Haushaltsgeschirrspülmaschine gemäß dem vorangegangenen Anspruch, **dadurch gekennzeichnet, dass** zumindest eine den Aufnahmeraum (1) begrenzende Wandung (4; 9; 14; 15) wenigstens abschnittsweise durch ein Wärmetauscherelement (6) gebildet ist.

3. Haushaltsgeschirrspülmaschine gemäß einem der vorangegangenen Ansprüche, **dadurch gekennzeichnet, dass** sich ein Wärmetauscherelement (6) über wenigstens zwei den Aufnahmeraum (1) begrenzende Wandungen (4; 9; 14; 15) erstreckt oder wenigstens zwei den Aufnahmeraum (1) begrenzende Wandungen (4; 9; 14; 15) bildet, wobei sich der oder die Strömungskanäle (8) nur über einen Teil der Wandungen (4; 9; 14; 15) erstrecken.

4. Haushaltsgeschirrspülmaschine gemäß einem der vorangegangenen Ansprüche, **dadurch gekennzeichnet, dass** die Haushaltsgeschirrspülmaschine wenigstens zwei Wärmetauscherelemente (6) aufweist, wobei der Verdampfer (3) der Wärmepumpenanordnung durch ein erstes Wärmetauscherelement (6) und der Verflüssiger (5) durch ein zweites Wärmetauscherelement (6) gebildet ist.

5. Haushaltsgeschirrspülmaschine gemäß einem der vorangegangenen Ansprüche, **dadurch gekennzeichnet, dass** wenigstens ein Wärmetauscherelement (6) im Bereich einer den Aufnahmeraum (1) begrenzenden Wandung (4; 9; 14; 15) angeordnet ist und mit der Wandung (4; 9; 14; 15) in wärmeleitendem Kontakt steht.

6. Haushaltsgeschirrspülmaschine gemäß einem der vorangegangenen Ansprüche, **dadurch gekennzeichnet, dass** zumindest ein erstes Flächenelement (7) eine Vertiefung (10) aufweist, die einen Strömungskanal (8) teilweise begrenzt, wobei die restliche Begrenzung dieses Strömungskanals (8) durch ein zweites Flächenelement (7), vorzugsweise durch eine Vertiefung (10) desselben, gebildet ist.

7. Haushaltsgeschirrspülmaschine gemäß einem der vorangegangenen Ansprüche, **dadurch gekennzeichnet, dass** die Flächenelemente (7) zumindest eines Wärmetauscherelements (6) wenigstens im Bereich des oder der Strömungskanäle (8) dieses Wärmetauscherelements (6) bezüglich einer Kontaktebene (11) der beiden Flächenelemente (7) spiegelsymmetrisch ausgebildet sind.

8. Haushaltsgeschirrspülmaschine gemäß einem der vorangegangenen Ansprüche, **dadurch gekennzeichnet, dass** wenigstens ein Wärmetauscherelement (6) zwei Flächenelemente (7) in Form von Metall- oder Kunststoffplatten umfasst, die stoffschlüssig, formschlüssig oder mit Hilfe eines Haftmittels miteinander verbunden sind.

## Claims

1. Household dishwasher having a receiving space (1) for receiving items to be washed (2), wherein the household dishwasher comprises a heat pump arrangement with at least one evaporator (3) for evaporating a refrigerant and a condenser (5) for condensing the refrigerant, wherein the evaporator (3) and/or the condenser (5) comprise one or more heat exchanger elements (6) which are at least partially flat, wherein at least one of the heat exchanger elements (6) comprises two surface elements (7) which are connected to one another in sections such that one or more flow channels (8) for the refrigerant are embodied between the surface elements (7), wherein the receiving space (1) is delimited by a door (12) and a dishwasher cavity (13), **characterised in that** at least one heat exchanger element (6) is formed by the dishwasher cavity (13), wherein a heat exchanger element (6) formed by the dishwasher cavity (13) and serving as an evaporator (3) forms a side wall (14), a top wall (15) and/or a rear wall (9) of the dishwasher cavity (13) and/or wherein a heat exchanger element (6) formed by the dishwasher cavity (13) and serving as a condenser (5) forms a bottom wall (4) of the dishwasher cavity (13) or a section thereof.

2. Household dishwasher according to the preceding claim, **characterised in that** at least one wall (4; 9; 14; 15) delimiting the receiving space (1) is formed at least in sections by a heat exchanger element (6).

3. Household dishwasher according to one of the preceding claims, **characterised in that** a heat exchanger element (6) extends over at least two walls (4; 9; 14; 15) delimiting the receiving space (1) or forms at least two walls (4; 9; 14; 15) delimiting the receiving space (1), wherein the flow channel or flow channels (8) extend only over part of the walls (4; 9; 14; 15).

4. Household dishwasher according to one of the preceding claims, **characterised in that** the household dishwasher has at least two heat exchanger elements (6), wherein the evaporator (3) of the heat pump arrangement is formed by a first heat exchanger element (6) and the condenser (5) by a second heat exchanger element (6).

5. Household dishwasher according to one of the preceding claims, **characterised in that** at least one heat exchanger element (6) is arranged in the region of a wall (4; 9; 14; 15) delimiting the receiving space (1) and is in heat-conducting contact with the wall (4; 9; 14; 15).

6. Household dishwasher according to one of the preceding claims, **characterised in that** at least one first surface element (7) has an indentation (10) which partially delimits a flow channel (8), wherein the remaining delimitation of said flow channel (8) is formed by a second surface element (7), preferably by an indentation (10) thereof.

7. Household dishwasher according to one of the preceding claims, **characterised in that** the surface elements (7) of at least one heat exchanger element (6) are embodied mirror-symmetrically at least in the region of the flow channel or flow channels (8) of said heat exchanger element (6) with respect to a contact plane (11) of the two surface elements (7).

8. Household dishwasher according to one of the preceding claims, **characterised in that** at least one heat exchanger element (6) comprises two surface elements (7) in the form of metal or plastic plates which are connected to one another by material connection, by form fit or with the aid of an adhesive.

## Revendications

1. Lave-vaisselle ménager avec un espace d'accueil (1) pour l'accueil de vaisselle (2), dans lequel le lave-vaisselle ménager comprend un agencement de pompe à chaleur avec au moins un évaporateur (3) pour l'évaporation d'un agent frigorifique et un condenseur (5) pour la condensation de l'agent frigorifique, dans lequel l'évaporateur (3) et/ou le condenseur (5) comprennent un ou plusieurs élément(s) d'échangeur de chaleur (6) exécutés sous forme plate au moins par sections, dans lequel au moins un des éléments d'échangeur de chaleur (6) comprend deux éléments de surface (7) reliés par sections l'un à l'autre de telle sorte qu'un ou plusieurs canal/canaux d'écoulement (8) pour l'agent frigorifique est/sont constitué(s) entre les éléments de surface (7), dans lequel l'espace d'accueil (1) est délimité par une porte (12) et une cuve de lavage (13), **caractérisé en ce qu'**au moins un élément d'échangeur de chaleur (6) est constitué par la cuve de lavage (13), dans lequel un élément d'échangeur de chaleur (6) constitué par la cuve de lavage (13) et servant d'évaporateur (3) constitue une paroi latérale (14), une paroi supérieure (15) et/ou une paroi arrière (9) de la cuve de lavage (13) et/ou dans lequel un élément d'échangeur de chaleur (6) constitué par la cuve de lavage (13) et servant de condenseur (5) constitue une paroi inférieure (4) de la cuve de lavage (13) ou une section de celle-ci.

2. Lave-vaisselle ménager selon la revendication précédente, **caractérisé en ce qu'**au moins une paroi (4 ; 9 ; 14 ; 15) délimitant l'espace d'accueil (1) est constituée au moins par sections par un élément d'échangeur de chaleur (6).

3. Lave-vaisselle ménager selon l'une des revendications précédentes, **caractérisé en ce qu'**un élément d'échangeur de chaleur (6) s'étend sur au moins deux parois (4 ; 9 ; 14 ; 15) délimitant l'espace d'accueil (1) ou constitue au moins deux parois (4 ; 9 ; 14 ; 15) délimitant l'espace d'accueil (1), dans lequel le canal ou les canaux d'écoulement (8) s'étend(ent) uniquement sur une partie des parois (4 ; 9 ; 14 ; 15).

4. Lave-vaisselle ménager selon l'une des revendications précédentes, **caractérisé en ce que** le lave-vaisselle ménager présente au moins deux éléments d'échangeur de chaleur (6), dans lequel l'évaporateur (3) de l'agencement de pompe à chaleur est constitué par un premier élément d'échangeur de chaleur (6) et le condenseur (5) par un deuxième élément d'échangeur de chaleur (6).

5. Lave-vaisselle ménager selon l'une des revendications précédentes, **caractérisé en ce qu'**au moins un élément d'échangeur de chaleur (6) est disposé dans la zone d'une paroi (4 ; 9 ; 14 ; 15) délimitant l'espace d'accueil (1) et se trouve en contact thermoconducteur avec la paroi (4 ; 9 ; 14 ; 15).

6. Lave-vaisselle ménager selon l'une des revendications précédentes, **caractérisé en ce qu'**au moins un premier élément de surface (7) présente une concavité (10) qui délimite partiellement un canal d'écoulement (8), dans lequel la délimitation résiduelle de ce canal d'écoulement (8) est constituée par un deuxième élément de surface (7), de préférence par une concavité (10) de celui-ci.

7. Lave-vaisselle ménager selon l'une des revendications précédentes, **caractérisé en ce que** les éléments de surface (7) d'au moins un élément d'échangeur de chaleur (6) sont exécutés au moins dans la zone du ou des canaux d'écoulement (8) de cet élément d'échangeur de chaleur (6) de façon symétrique par rapport à un plan de contact (11) des deux éléments de surface (7).

8. Lave-vaisselle ménager selon l'une des revendications précédentes, **caractérisé en ce qu'**au moins un élément d'échangeur de chaleur (6) comprend deux éléments de surface (7) sous la forme de plaques métalliques ou en plastique, lesquelles sont reliées l'une à l'autre par complémentarité de matières, de formes ou à l'aide d'un agent adhésif.
